**Europäisches Patentamt**

**European Patent Office**

**Office européen des brevets**

(11) Publication number : **0 306 106 B1**

# (12) EUROPEAN PATENT SPECIFICATION

(45) Date of publication of patent specification :
**29.01.92 Bulletin 92/05**

(51) Int. Cl.⁵ : **B60V 1/16**

(21) Application number : **88201869.0**

(22) Date of filing : **31.08.88**

(54) Hovercraft.

(30) Priority : **01.09.87 NL 8702055**

(43) Date of publication of application :
**08.03.89 Bulletin 89/10**

(45) Publication of the grant of the patent :
**29.01.92 Bulletin 92/05**

(84) Designated Contracting States :
**AT BE CH DE ES FR GB GR IT LI LU NL SE**

(56) References cited :
**US-A- 3 146 752**
**US-A- 4 254 842**

(73) Proprietor : **B.V. KONINKLIJKE MAATSCHAPPIJ "DE SCHELDE" Glacisstraat 165 P.O. Box 16 NL-4381 SE Vlissingen (NL)**

(72) Inventor : **Ludolpij, Johannes W. L. Goeman Borgesiusstraat 64 NL-4384 JR Vlissingen (NL)**

(74) Representative : **Baarslag, Aldert D. et al Nederlandsch Octrooibureau Scheveningseweg 82 P.O. Box 29720 NL-2502 LS 's-Gravenhage (NL)**

## Description

The invention relates to a hovercraft which is provided on the underside with a pressurized air-cushion space which is bounded at least at the front by a movable screen which is connected to the vessel by means of one or more pairs of arms placed above one another.

Such a hovercraft is known from US-A-3,146,752. The screen of said known vessel is connected to the vessel by means of two linkages, each of which extend obliquely upwards in the direction of the front of the vessel to a hinge point on the vessel so that the screen is rotatable about a fixed point and, therefore, is movable up and down with respect to the vessel. In order to give the screen the desired position, a control system consisting of a damper or pneumatic spring attached to an accumulator is necessary. Without such a control system the screen cannot assume the correct position with respect to the water surface. The screen hangs under the vessel such that it is dragged along by the vessel and the desired position is determined by the control system.

The object of the invention is to provide a hovercraft, the screen of which is attached to the vessel in such a manner that it can self-adjust itself in an optimum manner during operation.

For this purpose, according to the invention each arm has one end connected to the vessel and the other end connected to the screen and of each pair of arms one can bend or buckle between its ends and the other either can bend or buckle between its ends or is rigid and hingeable at its two ends, and in that the fixing points of the arms to the screen, at least when the air-cushion space is pressurized, seen in the longitudinal direction of the vessel, are located in front of the fixing points of the arms to the vessel.

By using this design it can be achieved that the gravitational force acting on the screen, the resultant of the air-cushion pressure on the screen, the resultant of the air-cushion pressure on the said arms and the reaction force of the water surface are in equilibrium with one another.

The screen has two possibilities of movement, namely a primary movement which is directed perpendicularly to the water and a secondary pivoting movement around the point where the uppermost arm is fixed to the screen.

It has been found that a hovercraft designed according to the invention can reach a surprisingly high speed which is attributable to the very rapid self-adjustment of the screen.

In order to be able to control the position of the screen relative to the water very precisely and moreover to be able to fold up the screen completely, it can be advantageous for at least one piston-cylinder structure to be mounted between the screen and the vessel and for a control system to be added to the structure in order to be able to anticipate the movement of the vessel relative to the waves.

Said possible control facility does not alter the fact that the screen is in principle self-adjusting through the use of one or two arms that can bend or buckle and the said position of the fixing points of the arms. In the equilibrium situation, the resistance in the water has a specific value. The control can play a part in the anticipation of the movement of the screen on the waves.

The lower end section of the screen, or of each segment, is preferably connected via a flexible or pivotable, or possibly detachable, link to the remaining section of the screen or the segment. In this manner the lower end sections form a sort of ski which can follow the relatively small irregularities of the water surface and which produces the necessary lift on the screen.

Since, for the screen according to the invention, it is important that said screen forms an air-tight closure, the slit-shaped space between the screen and hull sections of the vessel as well as the space between the screen sections themselves may be sealed by at least one strip of a flexible material wich is attached at one end to a side of the screen and the other end of which rests freely against the hull section.

The invention is explained further with reference to the drawing, in which :

Figure 1 shows, in longitudinal section, the front end of a vessel with a screen according to the invention ;

Figure 2 shows a front view of the vessel ;

Figure 3 represents a detached screen from the rear,

Figure 4 shows the sealing between the screen and hull sections ;

Figure 5 represents the interplay of forces on the hinge points of the screen ;

Figure 6 represents an equilibrium state of the screen,

Figure 7 shows the flexible connecting arm that at the same time serves as a sealing element ;

Figure 8 shows an alternative embodiment with additional cable ;

Figure 9 shows an alternative embodiment with a drum-shaped rigid hinge arm which can roll down ; and

Figure 10 shows an alternative embodiment in which the screen is suspended solely from cables.

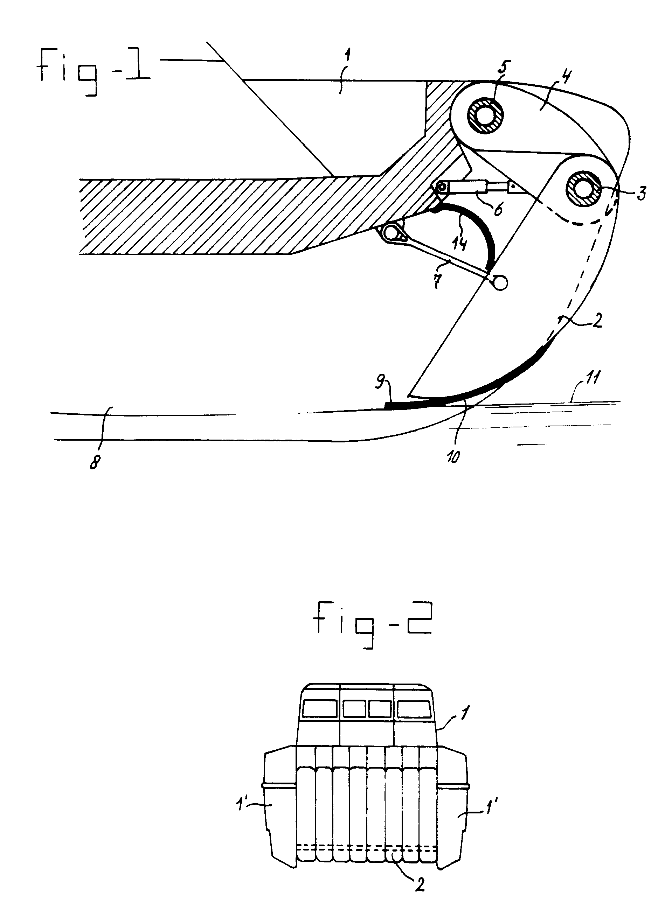

As shown in Figures 1, 2 and 3, a screen 2, which is composed of a number of segments 2′ situated next to each other, is placed at the front of the vessel 1. The screen is pivotably attached at 3 to a number of arm constructions 4 that are pivotably attached at 5 to the vessel 1, a number of piston-cylinder structures 6 being placed between said arm constructions 4 and the vessel 1.

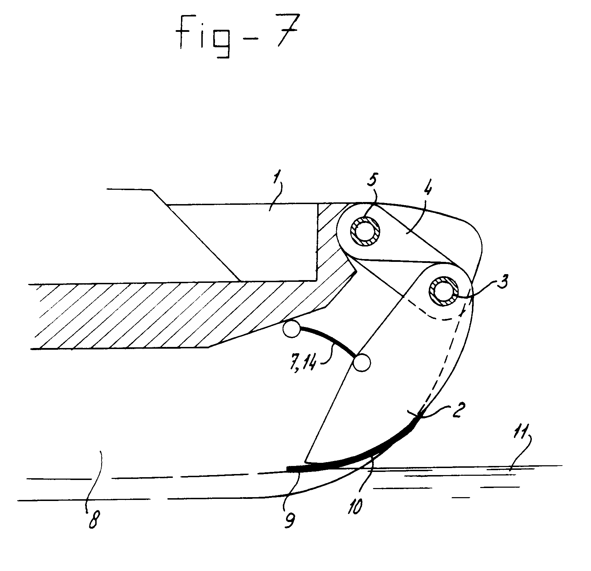

Furthermore, the screen 2 is connected to the vessel by means of the flexible arm 7. A membrane 14 serves as a sealing between the screen sections and the top of the air-cushion space, it being possible in the particular case as shown in Figure 7 for said membrane to be used at the same time as a flexible connecting arm.

The air-cushion space 8 is bounded at the sides by the hull sections 1', while a screen construction which may be of the same type as the screen construction shown is likewise placed at the rear (not shown) of the vessel 1. If both screen constructions are folded up by means of the piston-cylinder units 6, a catamaran vessel is obtained.

The lower end sections 9 of the segments 2' are attached to the remaining section of the segments 2' by means of a flexible connection 10, so that these lower end sections form a sort of ski that planes over the water surface 11.

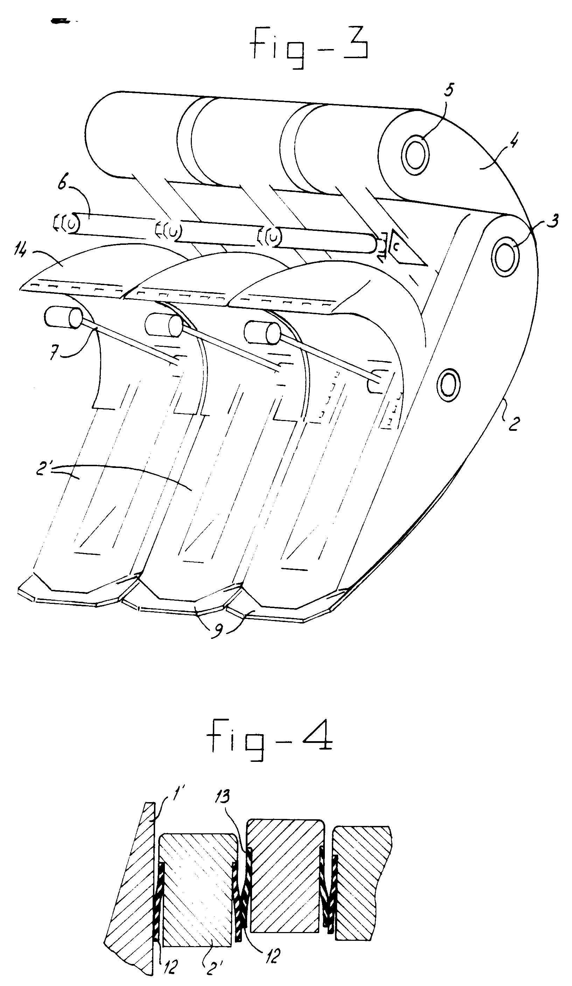

As shown in Figure 4, at the sides of the screen 2, strips 12 of a flexible material are attached, the other ends of which rest against the hull sections 1' and skirt elements, as a result of which an air-tight seal is obtained.

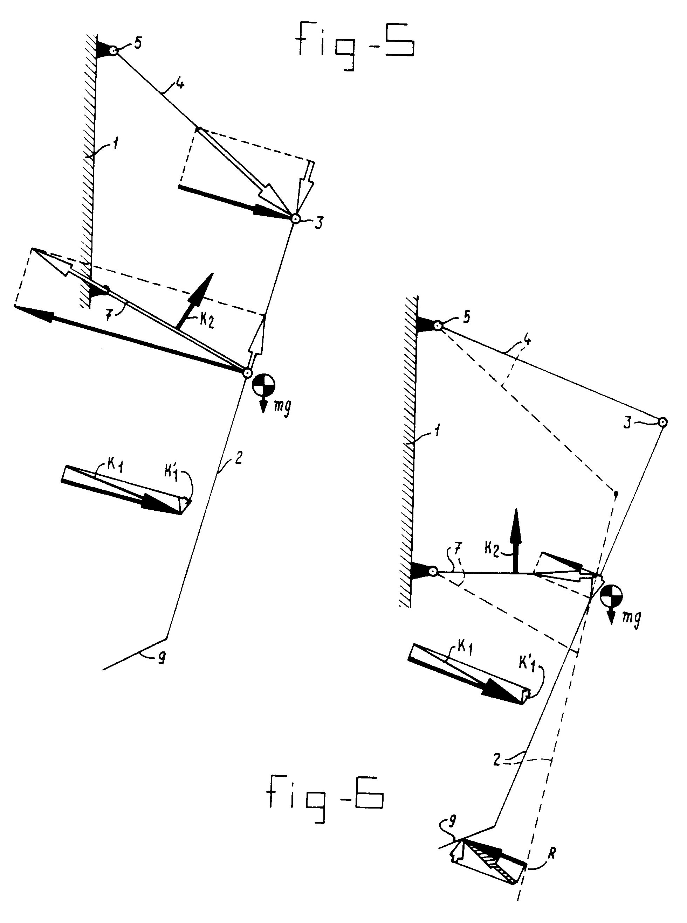

In Figure 5, the interplay of forces on the hinge points of the screen is represented, mg being the force of gravity acting on the screen 2, K1 being the resultant of the air-cushion pressure on the screen 2, and K2 being the resultant of the air-cushion pressure on the connecting member 7. K2, mg and K1 are in this case in equilibrium.

In Figure 6, an equilibrium state for a case under load is represented, R being the force of a reaction with the water surface.

In the design according to Figure 1, the rigid hinge arm 4 must be located above the arm 7 that can bend or buckle. However, situations are also conceivable where the rigid arm is placed under the arm that can bend or buckle, for example when the screen 2 is connected via the arms 4 and 7 to a part attached to the hull and projecting in relation to it.

For the operation of the hovercraft according to the invention it is essential that in the equilibrium situation the resistance in the water has a specific value.

The membrane 14 might be omitted in the case that the connection of the screen to the hull of the vessel is in itself sealed, in other words that sealing members are placed between the arms 4 themselves and between the outermost arms 4 and the hull sections 1'. The screen 2 might be composed of one single section instead of segments. In the variant according to Figure 7, the membrane 14 serves at the same time as an arm 7.

The cylinders 6 can be controlled by a system that responds to sensors or the like in such a manner that the screen follows accurately the relative movements of the vessel with respect to the waves.

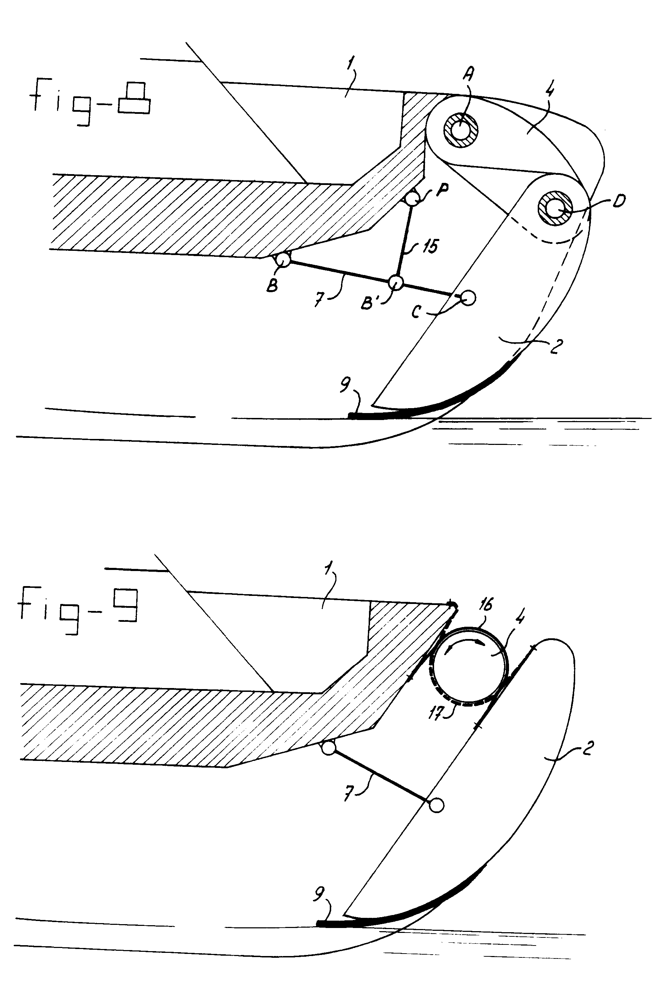

In the variant according to Figure 8, a cable 15 is placed between a point B' on the arm 7 which can bend or buckle and a fixed point P on the hull. IN the event that said cable is drawn tight the rectangle AB'CD takes effect, whereas when the cable 15 is slack the rectangle ABCD is effective. In said embodiment the screen 2 can be pulled closer to the hull and the screen in the lowest position cannot be swept under the ship. Cable 15 could be adjustable or may be replaced by a telescopic rod or cylinder.

Figure 9 shows an embodiment in which the rigid arm 4 has the form of a cylindrical drum that is restrained by belts 16, 17 which alternate with each other. The belts 17 are indicated by a broken line and the belts 16 by a continuous line. The drum can roll down along the wall of the ship's hull and of the screen over a distance determined by the belts.

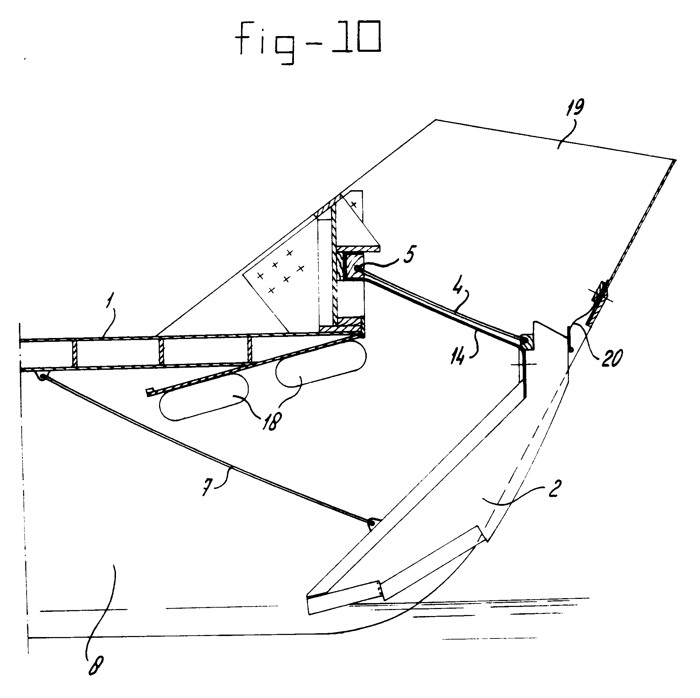

Figure 10 shows an embodiment where not only arms 7 but also arms 4 can bend. These arms 4, 7 are, for example, nylon cables. A sealing membrane 14 is fixed just below the cables 4. Because there is equilibrium during operation between the resultant of the air-cushion pressure on the screen, the gravitational force acting on the screen, the resultant of the air-cushion pressure on the arms 7 and the reaction force with the water surface, the screen assumes the desired position, the resistance in the water having a specific value which is optimum for achieving a high speed. Should the pressure in the air cushion be lost, the screen will be pushed backwards against the cushions 18. For safety reasons a belt or cable 20 is mounted between the upper edge of the screen and an extension 19 of the stem of the vessel. Arms that can buckle are possible instead of cables 4, 5.

Various modifications are possible within the scope of the invention. Essential to the inventive idea is that the screen or each screen segment is fixed to a vessel by means of two arms, of which at least one can bend or buckle. Moreover, the arms must extend backwards from the screen.

**Claims**

1. Hovercraft which is provided on the underside with a pressurized air-cushion space (8) which is bounded at least at the front by a movable screen (2) which is connected to the vessel (1) by means of one or more pairs of arms (4 ; 7) placed above one another, characterized in that each arm (4, 7) has one end connected to the vessel (1) and the other end connected to the screen (2) and of each pair of arms (4 ; 7) one (7) can bend or buckle between its ends and the other (4) either can bend or buckle between its ends or is rigid and hingeable at its two ends, and in that the fixing points of the arms to the screen, at least when the air-cushion space is pressurized, seen in the longitudinal direction of the vessel, are located in front of the fixing points of the arms to the vessel.

2. Hovercraft according to claim 1, characterized in that at least one piston-cylinder structure (6) is mounted between the screen (2) and the vessel (1) and that a control system is added to the piston-cylinder structure in order to be able to anticipate the movement of the vessel relative to the waves.

3. Construction according to claims 1 or 2, characterized in that the lower end section (9) of the screen (2) is connected via a flexible or pivotably, or possibly detachable, link (10) to the remaining section of the screen.

4. Construction according to any one of the preceding claims, characterized in that the slit-shaped space between the screen (2) and the hull sections (1) of the vessel is sealed by at least one strip (12) of a flexible material which is attached at one end to a side of the screen (2) and an other end of which rests freely against the hull section (1').

5. Construction according to any one of the preceding claims, characterized in that the screen (2) consists of a number of segments (2').

6. Construction according to any one of the preceding claims, characterized in that, in the case of one rigid hinge arm (4) above and one arm (7) below that can bend or buckle, a cable (15) or telescopic rod or cylinder is placed between a point on the arm (7) which can bend or buckle and a fixed point on the vessel (1).


**Patentansprüche**

1. Luftkissenfahrzeug mit einem an seiner Unterseite vorgesehenen, unter Druck gesetzten Luftpolsterraum (8), der zumindest an der Vorderseite durch eine bewegbare Schutzwand (2) begrenzt ist, die mittels einem oder mehreren übereinander angeordneten Paaren von Armen (4 ; 7) mit dem Fahrzeugrumpf (1) verbunden ist, dadurch gekennzeichnet, daß jeder Arm an einem Ende mit dem Fahrzeugrumpf (1) und am anderen Ende mit der Schutzwand (2) verbunden ist, wobei von jedem Paar von Armen (4 ; 7) einer (7) zwischen seinen Enden biegbar oder knickbar und der andere (4) entweder biegbar oder knickbar zwischen seinen Enden oder starr und an seinen beiden Enden gelenkig angebracht ist, und daß die Befestigungspunkte der Arme an der Schutzwand, zumindest wenn der Luftpolsterraum unter Druck gesetzt ist, in Längsrichtung des Fahrzeugrumpfs gesehen vor den Befestigungspunkten der Arme am Fahrzeugrumpf angeordnet sind.

2. Luftkissenfahrzeug nach Anspruch 1, dadurch gekennzeichnet, daß zumindest einer Kolbenzylindereinheit (6) zwischen der Schutzwand (2) und dem Fahrzeugrumpf (1) montiert ist und daß der Kolbenzylindereinheit eine Steuereinrichtung zugefügt ist, um die Bewegung des Fahrzeugrumpfs in bezug auf die Wellen voraussehen zu können.

3. Vorrichtung nach Anspruch 1 oder 2, dadurch gekennzeichnet, daß der untere Endabschnitt (9) der Schutzwand (2) über ein flexibles oder drehbar angebrachtes, oder vorzugsweise lösbares Gelenk (10) mit dem übrigen Abschnitt der Schutzwand verbunden ist.

4. Vorrichtung nach einem der vorhergehenden Ansprüche, dadurch gekennzeichnet, daß der schlitzförmige Zwischenraum zwischen der Schutzwand (2) und den Rumpfabschnitten (1) des Fahrzeugs mittels zumindest eines Streifens (12) eines flexiblen Werkstoffs abgedichtet ist, der an einem Ende an einer Seite der Schutzwand (2) befestigt ist und dessen anderes Ende frei gegen den Rumpfabschnitt (1') anliegt.

5. Vorrichtung nach einem der vorhergehenden Ansprüche, dadurch gekennzeichnet, daß die Schutzwand (2) aus einer Anzahl von Segmenten (2') besteht.

6. Vorrichtung nach einem der vorhergehenden Ansprüche, dadurch gekennzeichnet, daß, für den Fall, daß ein starrer Gelenkarm (4) oben und unten ein Arm (7) vorgesehen ist, der bieg- oder knickbar ist, zwischen einem Punkt des Arms (7), der bieg- oder knickbar ist, und einem Festpunkt am Fahrzeugrumpf (1) ein Kabel (15) oder eine Teleskopstange oder ein Zylinder angeordnet ist.


**Revendications**

1. Véhicule marin à coussin d'air, pourvu sur le côté inférieur d'un volume (8) formant un coussin d'air pressurisé, qui est limité au moins à l'avant par un écran mobile (2) relié au véhicule (1) au moyen d'une ou de plusieurs paires de bras (4 ; 7) superposés, caractérisé en ce que chaque bras (4, 7) possède une extrémité reliée au véhicule (1) et l'autre extrémité reliée à l'écran (2) et de chaque paire de bras (4 ; 7), l'une (7) peut se courber ou se déformer entre ses extrémités et l'autre (4) peut soit se courber, soit se déformer entre ses extrémités ou est rigide et articulée à ses deux extrémités, et en ce que les points de fixation des bras à l'écran, au moins lorsque le volume formant un coussin d'air est pressurisé, en regardant dans le sens longitudinal du véhicule, sont situés en avant des points de fixation des bras au véhicule.

2. Véhicule marin à coussin d'air selon la revendication 1, caractérisé en ce qu'au moins une structure à cylindre et piston (6) est montée entre l'écran (2) et le véhicule (1) et en ce qu'un système de commande est ajouté à la structure à cylindre et piston afin de permettre d'anticiper le mouvement du véhicule par rapport aux vagues.

3. Construction selon la revendication 1 ou 2, caractérisée en ce que la section terminale inférieure (9) de l'écran (2) est reliée par une articulation (10) flexible ou pivotante, ou éventuellement détachable au reste de l'écran.

4. Construction selon l'une quelconque des revendications précédentes, caractérisée en ce que l'espace en forme de fente entre l'écran (2) et les parties de coque (1) du véhicule est clos jar au moins une bande (12) en un matériau flexible qui est fixée à une extrémité à un côté de l'écran (2) et dont l'autre extrémité repose librement contre la partie de coque (1').

5. Construction selon l'une quelconque des revendications précédentes, caractérisée en ce que l'écran (2) est constitué d'une pluralité de segments (2').

6. Construction selon l'une quelconque des revendications précédentes, caractérisée en ce que, dans le cas d'un bras d'articulation rigide (4) au-dessus et d'un bras (7) au dessous, qui peut se courber ou se déformer, un câble (15) ou une tige télescopique ou un vérin est disposé entre un joint sur le bras (7) qui peut se courber ou se déformer et un point fixe sur le véhicule (1).

Fig-1

1

5

4

3

6

14

7

2

9

11

8

10

Fig-2

1

1'

1'

2

Fig-3

Fig-4

fig-5

fig-6

Fig - 7

fig-8

A
1
4
P
15
D
B
7
B'
C
2
9

fig-9

1
16
4
17
7
2
9

fig-10